# EUROPEAN PATENT APPLICATION

(11) **EP 4 383 806 A1**
(43) Date of publication of application: **12.06.2024**
(21) Application number: 21952911.2
(22) Date of filing: 12.10.2021
(51) Int. Cl.: H04W 28/10

(54) **COMMUNICATION SYSTEM AND COMMUNICATION CONTROL METHOD**

(30) Priority: 05.08.2021 WO PCT/JP2021/029119
(71) Applicant: Nippon Telegraph And Telephone Corporation, Chiyoda-ku Tokyo 100-8116 (JP)
(72) Inventor: MIYAMOTO, Kenji, Musashino-shi, Tokyo 180-8585 (JP); SAKAI, Yoshihito, Musashino-shi, Tokyo 180-8585 (JP); SHIMADA, Tatsuya, Musashino-shi, Tokyo 180-8585 (JP); TAKAHASHI, Keita, Musashino-shi, Tokyo 180-8585 (JP)
(74) Representative: Brevalex
(86) International application number: PCT/JP2021/037648
(87) International publication number: WO 2023/013089

(57) **Abstract**

A communication system including one or more base stations that accommodates wireless terminals, one or more transfer apparatuses that transfer uplink communication of the wireless terminal received via the base station to an upper side, and a transfer apparatus controller that controls the one or more transfer apparatuses includes an information acquisition unit that acquires information on wireless communication between the base station and the wireless terminal for each traffic flow, a rate determination unit that determines a shaping rate of the traffic shaping for each traffic flow, so that delay jitter in the base station is mitigated on an upper side with respect to the base station, on the basis of the information on the wireless communication for each traffic flow, and a communication control unit that executes traffic shaping on the upper side with respect to the base station on the basis of the shaping rate determined by the rate determination unit.

## Description

### [Technical Field]

The present invention relates to technology of a communication system that accommodates wireless terminals, and a communication control apparatus.
This application claims priority on the basis of PCT/JP2021/29119 filed on August 5, 2021, the content of which is hereby incorporated by reference.

### [Background Art]

In the related art, there is a mobile communication system that performs retransmission control such as hybrid automatic repeat request (hybrid ARQ). In such a mobile communication system, in order to maintain an order of the signals when an order of a successfully received signal and a signal requiring retransmission is changed in an uplink, signals are buffered in a base station (see, for example, NPL 1 to NPL 5).

### [Citation List]

### [Non Patent Literature]

[NPL 1] "3GPP TS 38.322 V16.2.0", 3GPP, 2020.
[NPL 2] "3GPP TS 23.501 V17.0.0", 3GPP, 2021.
[NPL 3] "3GPP TS 28.552 V17.3.1", 3GPP, 2021.
[NPL 4] "3GPP TS 38.321 V16.4.0", 3GPP, 2021.
[NPL 5] "3GPP TS 38.211 V16.5.0", 3GPP, 2021.

### [Summary of Invention]

### [Technical Problem]

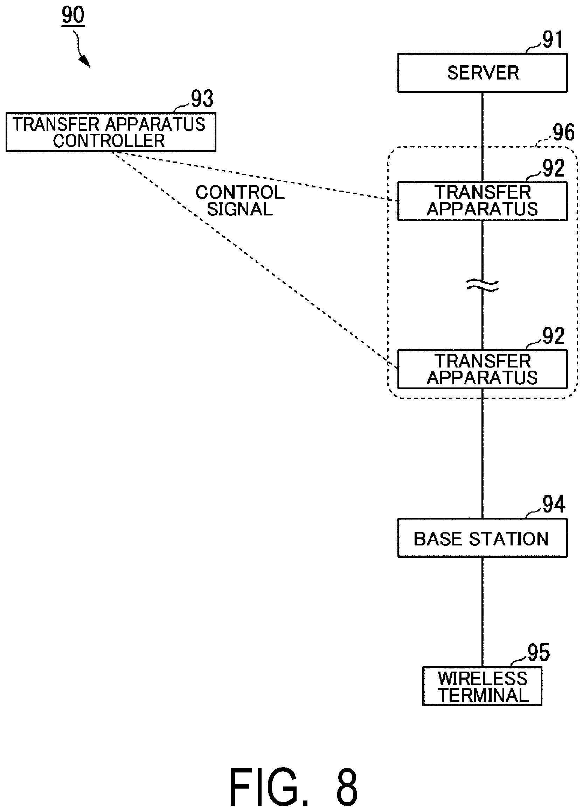

Fig. 8 is a diagram illustrating a configuration example of a mobile communication system 90 according to the related art. The mobile communication system 90 includes, for example, a server 91, one or more transfer apparatuses 92, a transfer apparatus controller 93, and a base station 94. The server 91 is an apparatus that communicates with the wireless terminal 95. The one or more transfer apparatuses 92 are apparatuses that constitute a transfer apparatus network 96 and transfer signals exchanged between the server 91 and the wireless terminal 95. The transfer apparatus controller 93 is an apparatus that controls the one or more transfer apparatuses 92 by transmitting a control signal. The base station 94 is an apparatus that communicates with the wireless terminal 95, transmits a signal transferred from the transfer apparatus 92 to the wireless terminal 95, and transfers a signal received from the wireless terminal 95 to the transfer apparatus 92.

However, in the related art described above, a signal successfully received from the wireless terminal 95 is immediately output from the base station 94 to the transfer apparatus 92 on the upper, whereas a retransmitted signal or a signal buffered to hold an order is output from the base station 94 with a delay. For this reason, intervals at which signals are output from the base station 94 may not be uniform, and delay jitter may be generated on the upper side with respect to the base station 94.

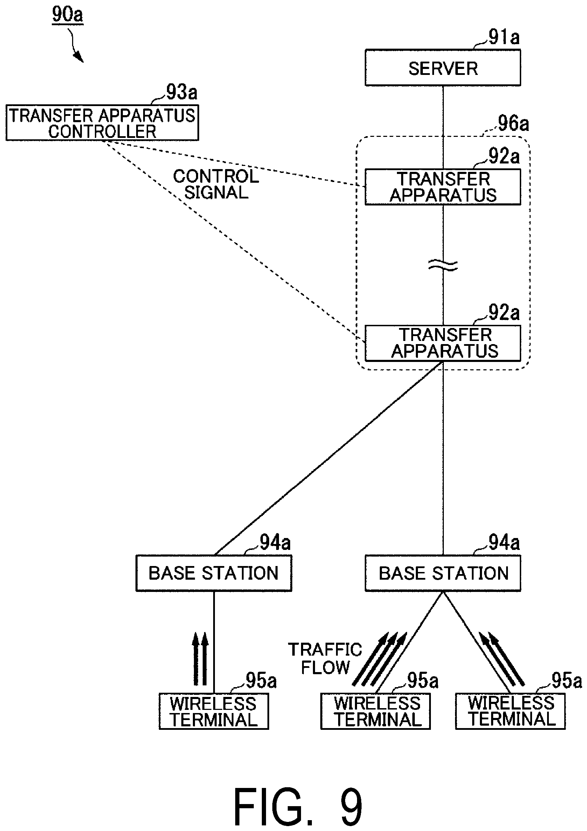

Further, Fig. 9 is a diagram illustrating a configuration example of a mobile communication system 90a according to the related art. The mobile communication system 90a includes, for example, a server 91a, one or more transfer apparatuses 92a, a transfer apparatus controller 93a, and a base station 94a. The server 91a is an apparatus that communicates with each of one or more wireless terminals 95a. The one or more transfer apparatuses 92a constitute a transfer apparatus network 96a and are apparatuses that transfer a signal exchanged between the server 91a and each wireless terminal 95a. The transfer apparatus controller 93a is an apparatus that controls the one or more transfer apparatuses 92a by transmitting a control signal. The base station 94a is an apparatus that communicates with each of the one or more wireless terminals 95a, transmits a signal transferred from the transfer apparatus 92a to each of the one or more wireless terminals 95a, and transfers a signal received from each of the one or more wireless terminals 95a to the transfer apparatus 92a. The wireless terminal 95a has one or more traffic flows.

However, as in the related art described above, when a plurality of base stations 94a are connected to one transfer apparatus 92a, when a plurality of wireless terminals 95a are connected to one base station 94a, or when one wireless terminal 95a includes a plurality of traffic flows, different types of traffic are mixed and output from the base station 94a. Therefore, in the case of the mobile communication system 90a of Fig. 9, there is a problem that delay jitter for each traffic flow which should be seen in more detail as the quality of service may become larger, as compared with a case of the mobile communication system 90 of Fig. 8.

In view of the above circumstances, an object of the present invention is to provide a technology capable of suppressing delay jitter.

### [Solution to Problem]

An aspect of the present invention is a communication system including one or more base stations configured to accommodate wireless terminals, one or more transfer apparatuses configured to transfer uplink communication of the wireless terminal received via the base station to an upper side, and a transfer apparatus controller configured to control the one or more transfer apparatuses, the communication system including: an information acquisition unit configured to acquire information on wireless communication between the base station and the wireless terminal for each traffic flow; a rate determination unit configured to determine a shaping rate of traffic shaping for each traffic flow, so that delay jitter in the base station is mitigated on an upper side with respect to the base station, on the basis of the information on the wireless communication for each traffic flow; and a communication control unit configured to execute the traffic shaping on the upper side with respect to the base station on the basis of the shaping rate determined by the rate determination unit.

An aspect of the present invention is, in a communication system including one or more base stations configured to accommodate wireless terminals, one or more transfer apparatuses configured to transfer uplink communication of the wireless terminal received via the base station to an upper side, and a transfer apparatus controller configured to control the one or more transfer apparatuses, a communication control method including: an information acquisition step of acquiring information on wireless communication between the base station and the wireless terminal for each traffic flow; a rate determination unit of determining a shaping rate of traffic shaping for each traffic flow, so that delay jitter in the base station is mitigated on an upper side with respect to the base station, on the basis of the information on the wireless communication for each traffic flow; and a communication control step of executing the traffic shaping on the upper side with respect to the base station on the basis of the shaping rate determined in the rate determination step.

### [Advantageous Effects of Invention]

According to the present invention, it is possible to suppress the occurrence of delay jitter.

### [Brief Description of Drawings]

[Fig. 1]

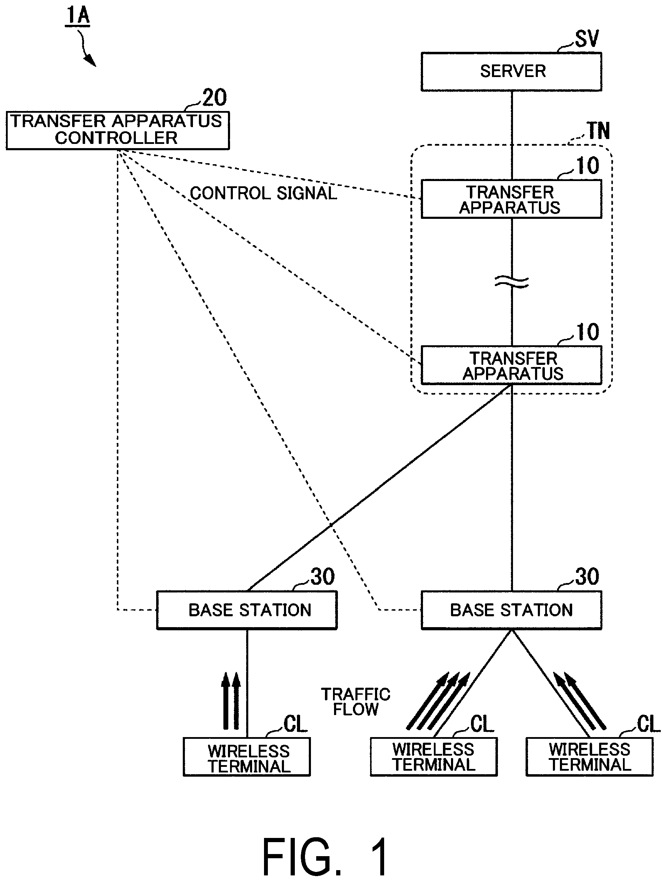

   Fig. 1 is a diagram illustrating a system configuration example of a mobile communication system according to a first embodiment.
[Fig. 2]

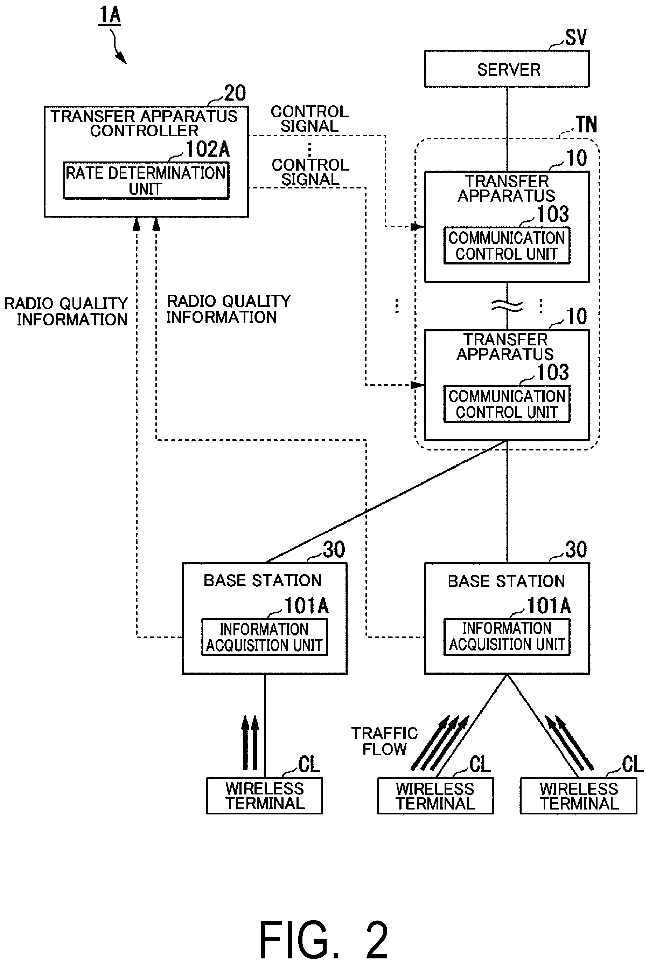

   Fig. 2 is a diagram illustrating a specific example of a functional configuration of the mobile communication system according to the first embodiment.
[Fig. 3]

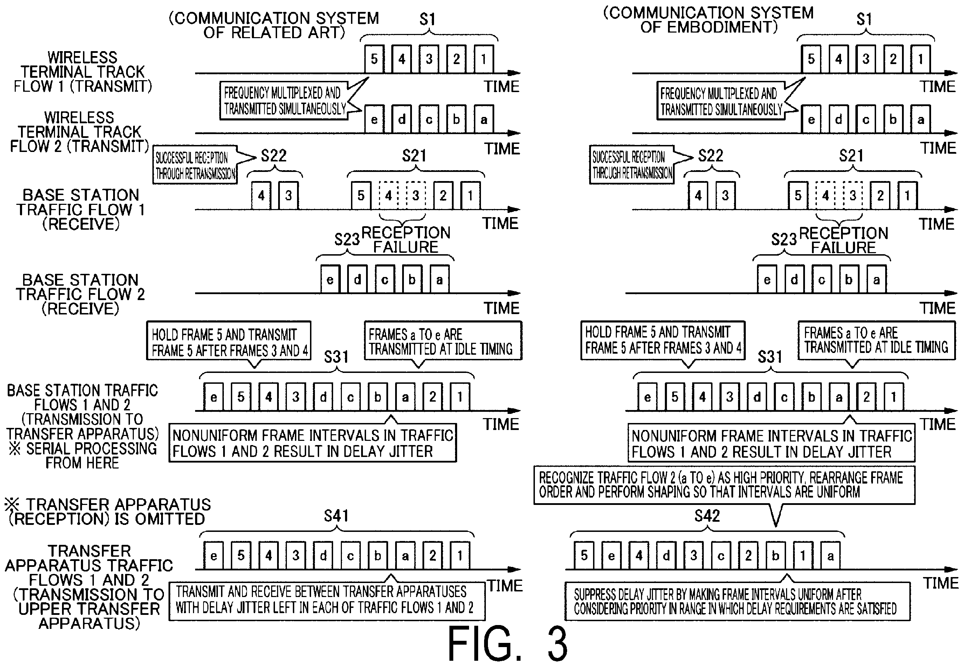

   Fig. 3 is an image diagram illustrating that an effect of suppression of delay jitter through shaping of a transfer apparatus is obtained in the mobile communication system of the first embodiment.
[Fig. 4]

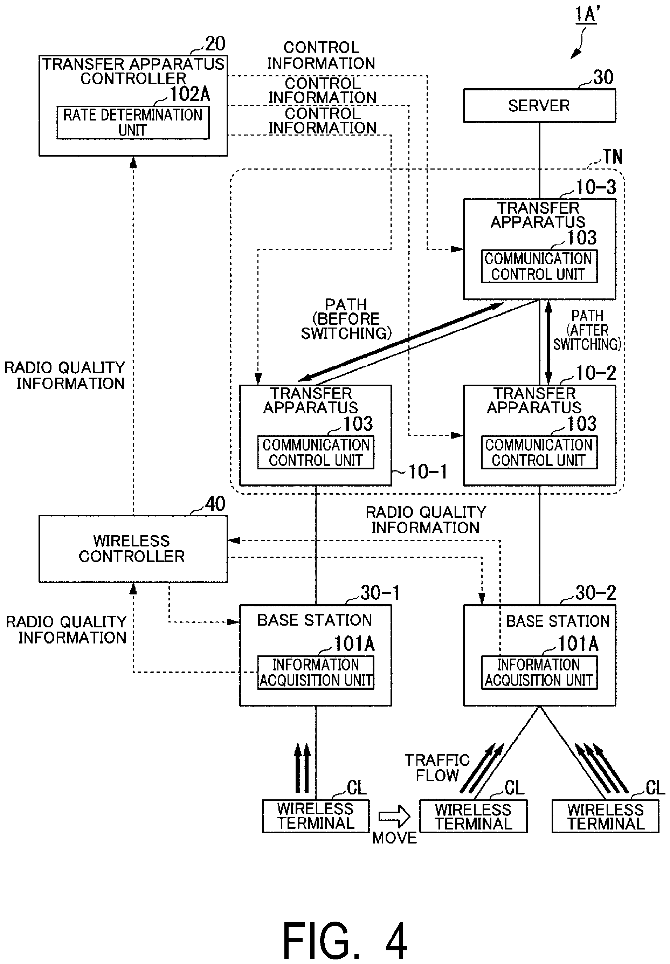

   Fig. 4 is a diagram illustrating a modification example of the mobile communication system of the first embodiment.
[Fig. 5]

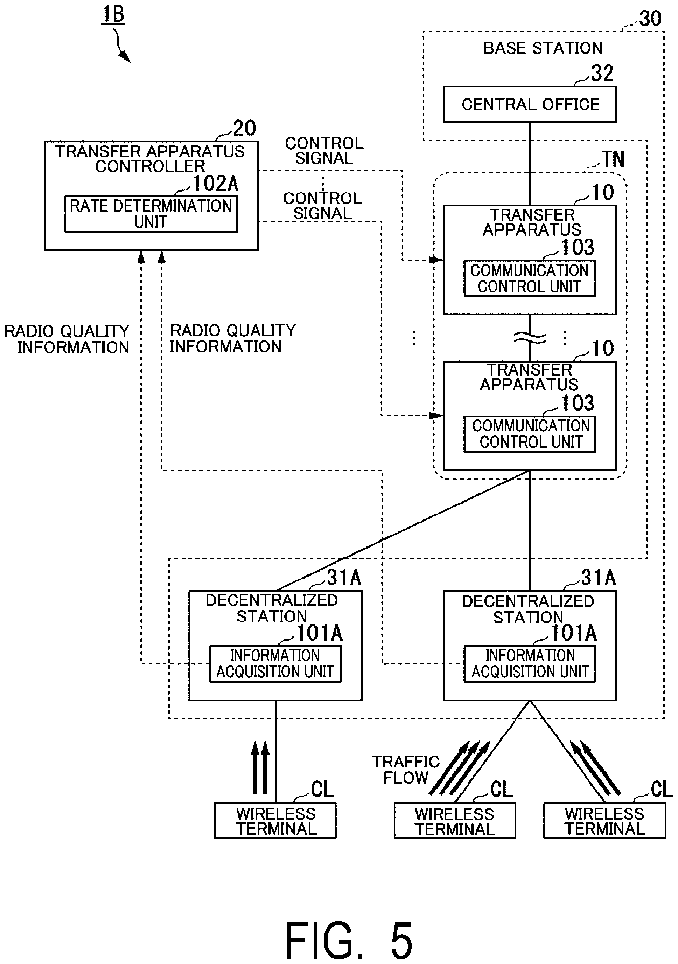

   Fig. 5 is a diagram illustrating a system configuration example of a mobile communication system according to a second embodiment.
[Fig. 6]

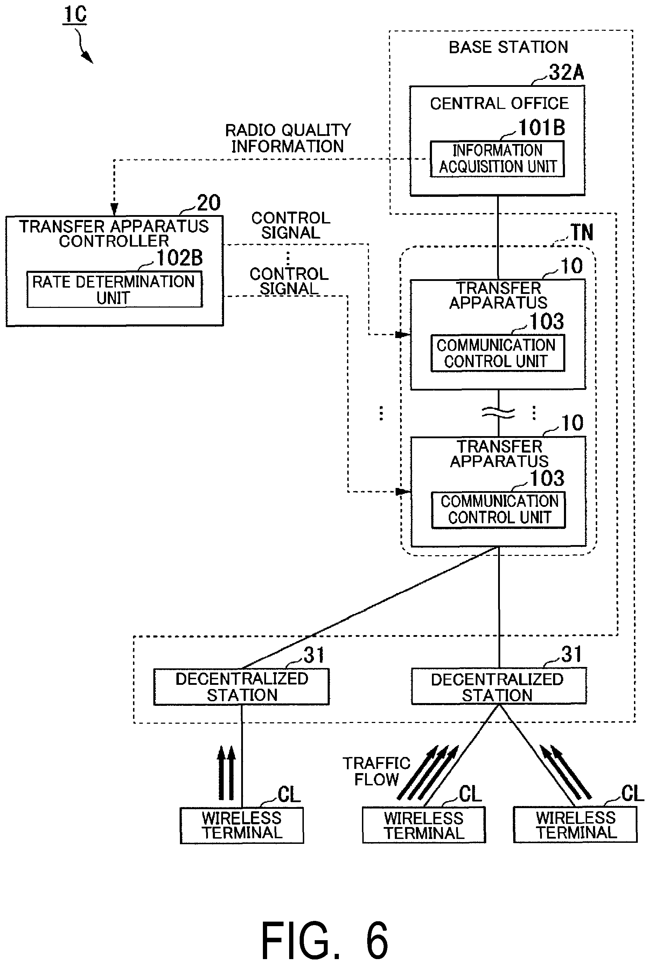

   Fig. 6 is a diagram illustrating a system configuration example of a mobile communication system according to a third embodiment.
[Fig. 7]

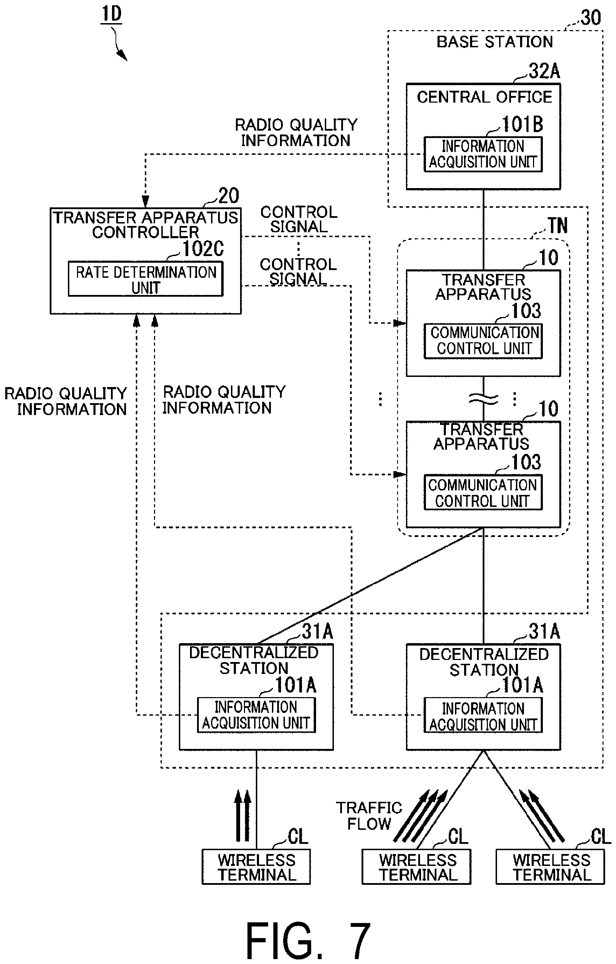

   Fig. 7 is a diagram illustrating a system configuration example of a mobile communication system according to a fourth embodiment.
[Fig. 8]
   Fig. 8 is a diagram illustrating a configuration example of a mobile communication system according to the related art.
[Fig. 9]
   Fig. 9 is a diagram illustrating a configuration example of a mobile communication system according to the related art;

### [Description of Embodiments]

Embodiments of the present invention will be described in detail with reference to the drawings.

### <First Embodiment>

### [System Configuration of Mobile Communication System]

Fig. 1 is a diagram illustrating a system configuration example of a mobile communication system 1A of the first embodiment. The mobile communication system 1A includes, for example, one or more transfer apparatuses 10, a transfer apparatus controller 20, and one or more base stations 30. A server SV is an apparatus that communicates with each of one or more wireless terminals CL.

The one or more transfer apparatuses 10 constitute a transfer apparatus network TN, and transfer a signal exchanged between the server SV and the one or more wireless terminals CL. The transfer apparatus controller 20 is an apparatus that controls the one or more transfer apparatuses 10 by transmitting a control signal. The base station 30 is an apparatus that communicates with each of the one or more wireless terminals CL, transmits a signal transferred from the transfer apparatus 10 to the wireless terminal CL, and transfers a signal received from the wireless terminals CL to the transfer apparatus 10. Each of the one or more wireless terminals CL has one or more traffic flows. The transfer apparatus controller 20 is communicatively connected to each of the one or more transfer apparatuses 10 and the base station 30.

The one or more transfer apparatuses 10, the transfer apparatus controller 20, and the base station 30 included in the mobile communication system 1A are configured using, for example, a processor such as a central processing unit (CPU), a memory, and a communication interface. Each of the one or more transfer apparatuses 10, the transfer apparatus controller 20, and the base station 30 functions as a communication apparatus including a control unit by the processor executing a program.

The control unit provides each function for causing the communication apparatus to function as the transfer apparatus 10, the transfer apparatus controller 20, or the base station 30. All or some of respective functions of the control unit may be realized using hardware such as an application specific integrated circuit (ASIC), a programmable logic device (PLD), or a field programmable gate array (FPGA).

The program may be recorded on a computer-readable recording medium. The computer-readable recording medium is a storage apparatus such as a portable medium such as a flexible disk, a magneto-optical disc, a ROM, a CD-ROM, a semiconductor storage apparatus (such as SSD: Solid State Drives), or a hard disk or a semiconductor storage apparatus built into a computer system. The above program may be transmitted via a telecommunication line.

### [Specific Example of Functional Configuration of Mobile Communication System]

Fig. 2 is a diagram illustrating a specific example of a functional configuration of the mobile communication system 1A of the first embodiment. The mobile communication system 1A includes, for example, one or more information acquisition units 101A, a rate determination units 102A, and one or more communication control units 103.

The information acquisition unit 101A (information acquirer) acquires information on wireless communication between the base station 30 and the wireless terminal CL (hereinafter referred to as "wireless communication information"). The rate determination unit 102A collects the wireless communication information acquired by each of one or more information acquisition units 101A, and determines, for each traffic flow, a shaping rate of traffic shaping so that delay jitter in the base station 30 is mitigated in the upper side with respect to the base station 30, on the basis of the collected wireless communication information. The communication control unit 103 (communication controller) executes the traffic shaping on the upper side with respect to the base station 30 on the basis of the shaping rate determined by the rate determination unit 102A.

Specifically, in the mobile communication system 1A of the first embodiment, the information acquisition unit 101A is included in a control unit of the base station 30, the rate determination unit 102A is included in a control unit of the transfer apparatus controller 20, and the communication control unit 103 is included in a control unit of the transfer apparatus 10.

In this case, one or more information acquisition units 101A acquire information including control information on the quality of wireless communication between the base station 30 and the wireless terminal CL (hereinafter referred to as "the radio quality information"), as the wireless communication information, and transmit the acquired radio quality information to the transfer apparatus controller 20. The radio quality information includes information on communication quality for each traffic flow in wireless communication between the base station 30 and the wireless terminal CL, and information indicating a priority of each traffic flow.

The rate determination unit 102A (rate determiner) collects the radio quality information acquired by each of the one or more information acquisition units 101A, and determines the shaping rate for each traffic flow on the basis of the collected radio quality information. Here, the rate determination unit 102A considers the priority of each traffic flow in a range in which a predetermined delay requirement is satisfied, and then, determines the shaping rate of the traffic shaping for each traffic flow so that the delay jitter in the base station 30 is mitigated on the upper side with respect to the base station 30. The rate determination unit 102A notifies the communication control unit 103 of the transfer apparatus 10 of the determined shaping rate.

In the one or more transfer apparatuses 10, the communication control unit 103 executes the traffic shaping of its own apparatus on the basis of the shaping rate notified from the rate determination unit 102A of the transfer apparatus controller 20.

Here, the radio quality information acquired as the wireless communication information is, for example, 5G QoS indicator (5QI) assigned to a header of an N3 interface signal in fifth generation (5G) mobile communication, or a PDCP SDU data volume for each 5QI.

For example, the rate determination unit 102A of the transfer apparatus controller 20 stores in advance an association table (association information) in which appropriate shaping rate candidates determined according to a value of the 5QI in advance are associated with the value of the 5QI, and the shaping rate associated with the 5QI value (the radio quality information) acquired from the base station 30 is determined as the shaping rate to be applied to the transfer apparatus 10 in this association table. The appropriate shaping rate is a communication rate that is low enough to narrow the communication band so that the delay jitter in the base station 30 is mitigated on the upper side with respect to the base station 30 while maintaining at least a minimum required communication rate.

Alternatively, examples of the radio quality information acquired as the wireless communication information may include a scheduling request, an uplink grant, and a buffer status report, which the base station 30 receives from the wireless terminal CL, and a radio frame number, subframe number, and slot number at which the base station has received the scheduling request, uplink grant, and buffer status report.

In general, the scheduling request is information that a wireless terminal transmits to a base station to notify of the start of the uplink communication. The uplink grant is information transmitted by a base station in downlink communication in order to notify a wireless terminal of a wireless communication scheme in which uplink communication is permitted or frequency resource allocation, and indirectly shows an amount of data of the uplink communication. The buffer status report is information transmitted by a wireless terminal to notify the base station of how much data is held in the buffer.

The radio frame number, subframe number, and slot number are numbers on the three-stage data basis transmitted by wireless communication, a radio frame is defined as 10 [ms], a subframe is defined as 1 [ms], and a slot is defined as, for example, a length selected from among a plurality of values such as 1 [ms] and 0.5 [ms], and it is possible to obtain a transmission/reception timing of the wireless communication from these numbers.

The scheduling request, the uplink grant, and the buffer status report are transmitted in association with a radio frame number, subframe number, and slot number indicating a transmission timing for uplink communication. In this case, the rate determination unit 102A collects the radio quality information acquired by each of the one or more information acquisition units 101A, and determines an appropriate shaping rate for each traffic flow through calculation on the basis of the collected radio quality information.

Specifically, the rate determination unit 102A recognizes an amount of data buffered in the wireless terminal CL by the buffer status report received from the wireless terminal CL (hereinafter referred to as "buffer data"), and calculates, as an appropriate shaping rate, a communication rate low enough to narrow a communication band so that the delay jitter in the base station 30 is mitigated on the upper side with respect to the base station 30 while maintaining at least a minimum required communication rate for transmission of the buffer data having the amount of data.

More specifically, for example, when the rate determination unit 102A acquires the scheduling request from the information acquisition unit 101A, the shaping rate is initialized, and the radio frame number, subframe number, and slot number associated with the acquired the scheduling request are held. Thereafter, the shaping rate is updated each time the rate determination unit 102A acquires the buffer status report from the information acquisition unit 101A.

For update of the shaping rate, for example, the shaping rate is determined by adding a cumulative value of an amount of data in uplink communication calculated from one or more uplink grants acquired from the information acquisition unit 101A by the rate determination unit 102A between a radio frame number, subframe number, and slot number associated with the scheduling request and a radio frame number, subframe number, and slot number associated with the buffer status report, to an amount of data held by the wireless terminal notified by the buffer status report, and performing division at time intervals calculated from the radio frame number, subframe number, and slot number associated with the scheduling request and the radio frame number, subframe number, and slot number associated with the buffer status report.

The rate determination unit 102A is configured to collect information on a state of the transfer apparatus network TN (hereinafter referred to as "state information") from the transfer apparatus 10, and calculate the shaping rate to be applied to the transfer apparatus 10 on the basis of this state information and the radio quality information acquired from the base station 30. For example, the rate determination unit 102A may calculate the shaping rate in consideration of a congestion state of the transfer apparatus network TN recognized on the basis of the state information.

According to the mobile communication system 1A of the first embodiment configured as described above, the transfer apparatus 10 performs shaping at the shaping rate determined on the basis of the radio quality information on wireless communication between the wireless terminal CL and the base station 30, so that it is possible to suppress propagation of the delay jitter generated at a point in time of output of the base station to the upper side in the related art.

### [Effects of Suppression of Delay Jitter]

Fig. 3 is an image diagram illustrating that an effect of suppression of the delay jitter through shaping of the transfer apparatus 10 is obtained in the mobile communication system 1A of the first embodiment. In Fig. 3, a diagram on the left side illustrates a situation in which the delay jitter propagates to the upper side according to the related art, and a diagram on the right side illustrates a situation in which the delay jitter is suppressed by the mobile communication system 1A of the present embodiment.

A flow (steps S1 to S31) from the wireless terminal transmitting a frame to the base station receiving the frame and transmitting the frame to the transfer apparatus is the same between the related art and the present embodiment. Hereinafter, a flow from steps S1 to S31 that is the same between the related art and the present embodiment, will be described first.

First, the wireless terminal CL transmits first to fifth frames to the base station 30 at equal intervals in a first traffic flow (hereinafter referred to as "traffic flow 1") (step S1). Rectangles with numbers 1 to 5 in the figure represent the corresponding first to fifth frames. Further, the wireless terminal CL transmits frames a to e to the base station 30 at equal intervals in a second traffic flow (hereinafter referred to as "traffic flow 2") (step S1). Rectangles with alphabetic characters a to e in the figure represent corresponding frames a to e. The first to fifth frames and the frames a to e are frequency-multiplexed and transmitted simultaneously.

Next, the base station 30 receives the first to fifth frames transmitted by the wireless terminal CL. Specifically, here, the following steps S21 and S22 are assumed. Step S21 shows a situation in which the base station 30 normally receives the first, second and fifth frames, but fails to receive the third and fourth frames, which is a situation in which the wireless terminal CL is requested to perform a retransmission of the third and fourth frames. Step S22 shows a situation in which the base station 30 normally receives the retransmitted third and fourth frames.

Further, the base station 30 receives the frames a to e transmitted by the wireless terminal CL. Specifically, here, the following step S23 is assumed. Step S23 shows a situation in which the base station 30 has normally received all the frames a to e without making a retransmission request.

In this case, the base station 30 immediately transmits, to the transfer apparatus 10, the first and second frames among the first, second, and fifth frames that have been normally received. On the other hand, since the base station 30 holds an order of the frames for the fifth frame, it is necessary to hold the order until the third and fourth frames are normally received by the retransmission.

Next, the base station 30 transmits the frames a to e at an available timing. Step S31 shows a situation in which the base station 30 transmits the frames a to d to the transfer apparatus 10 at equal intervals at an available timing between transmission of the second frame and normal reception of the third frame through retransmission. When the third and fourth frames are normally received by retransmission, the base station 30 transmits the third to fifth frames to the transfer apparatus 10 at equal intervals.

Next, the base station 30 transmits the frame e to the transfer apparatus 10 (step S31). In Fig. 3, description of a situation of frame reception in the transfer apparatus 10 is omitted.

In a flow (steps S 1 to S31) from the wireless terminal transmitting a frame to the base station receiving the frame and transmitting the frame to the transfer apparatus (steps S1 to S31) illustrated in Fig. 3, a transmission interval between the second frame and the third frame is longer than that between other frames, and the delay jitter is generated. Further, in the flow, a transmission interval between the frame d and the frame e is longer than that between other frames, and the delay jitter is generated.

That is, in the flow, frame intervals are not uniform in each of traffic flows 1 and 2, and the delay jitter is generated. As described above, the first to fifth frames and the frames a to e are transmitted and received in the same flow in the communication system of the related art so far.

Thereafter, in the communication system of the related art, the first to fifth frames and the frames a to e are transferred to the upper side by the one or more transfer apparatuses with the delay jitter generated in the base station maintained (step S41).

In contrast to the related art described above, in the mobile communication system 1A of the present embodiment, the one or more transfer apparatuses 10 considers the priority of each traffic flow in the range in which a predetermined delay requirement is satisfied using the transfer apparatus controller 20, and then, transfers the first to fifth frames and the frames a to e while performing the traffic shaping at the shaping rate determined to mitigate the delay jitter (step S42).

Such a configuration is provided so that the mobile communication system 1A of the present embodiment can mitigate the delay jitter generated in the base station 30 on the higher side than the base station 30. Fig. 3 illustrates a case in which the one or more transfer apparatuses 10 recognize traffic flow 2 (the frames a to e) as having a higher priority using the transfer apparatus controller 20, and the one or more transfer apparatuses 10 changes an order of frames on the basis of the priority, and performs the traffic shaping so that the frame intervals are also uniform.

That is, the frame a is preferentially transmitted over the first frame, as shown in step S42 of Fig. 3. Further, as shown in step S42 of Fig. 3, all of the first to fifth frames and the frames a to e are transmitted at equal intervals (in every other frame).

In the mobile communication system 1A of the first embodiment, the configuration in which the transfer apparatus controller 20 determines the shaping rate of the transfer apparatus 10 for each traffic flow on the basis of the radio quality information is also applicable to communication systems other than the mobile communication system. For example, when the base station 30 is replaced with a wireless local area network (LAN) access point (hereinafter referred to as "wireless AP"), it is possible to suppress delay jitter in the wireless LAN system by acquiring radio quality information for wireless communication between the wireless AP and the wireless terminal CL connected to the wireless AP.

In the present embodiment, each transfer apparatus 10 includes the communication control unit 103, and the transfer apparatus controller 20 includes the rate determination unit 102A, but the present invention is not limited thereto. For example, a form in which the base station 30 includes the communication control unit and the rate determination unit, and the base station 30 rather than the transfer apparatus 10 performs shaping may be adopted.

### (Modification Example)

Fig. 4 is a diagram illustrating a modification example of the mobile communication system 1A of the first embodiment. Although a case in which the base station 30 directly supplies the radio quality information to the transfer apparatus controller 20 has been described in the first embodiment, the radio quality information may be supplied to the transfer apparatus controller 20 via an apparatus other than the base station 30, as illustrated in Fig. 4.

For example, in the mobile communication system 1A' of the modification example, when there are a plurality of base stations 30 and there is also a wireless controller 40 that controls the plurality of base stations 30, the wireless controller 40 may be configured to collect radio quality information from the plurality of base stations 30 and supply the collected radio quality information of the plurality of base stations 30 to the transfer apparatus controller 20.

The example of Fig. 4 shows a case in which the wireless terminal CL before a movement is accommodated in the base station 30 different from that before the movement, after the movement. Specifically, in the example of Fig. 4, the wireless terminal CL is accommodated in the base station 30-1 at a position before the movement, and is accommodated in the base station 30-2 at a position after the movement. In this case, the transfer apparatus controller 20 instructs the transfer apparatuses 10-1 and 10-2, which accommodate the base stations 30-1 and 30-2, and the transfer apparatus 10-3, which is located above these, to perform path switching according to a movement of the wireless terminal CL. This makes it possible for the wireless terminal CL to continue communication with the server SV even when the base station 30 accommodating the wireless terminal CL is changed.

In this case, the wireless controller 40 collects the radio quality information from the base stations 30-1 and 30-2 in addition to control of the base stations 30-1 and 30-2, and supplies the collected radio quality information to the transfer apparatus controller 20. In this case, for example, the transfer apparatus controller 20 determines the shaping rate to be applied to the transfer apparatus 10 (for example, the transfer apparatuses 10-1 and 10-3) on a communication path before the wireless terminal CL moves, on the basis of the radio quality information acquired from the base station 30-1, and determines the shaping rate to be applied to the transfer apparatus 10 (for example, the transfer apparatuses 10-2 and 10-3) on the communication path after the wireless terminal CL moves, on the basis of the radio quality information acquired from the base station 30-2. With such a configuration, the mobile communication system 1A' according to the present modification example appropriately updates the shaping rate for each traffic flow with respect to the plurality of transfer apparatuses 10 appropriately forming the transfer apparatus network TN according to the movement of the wireless terminal CL.

In the mobile communication system 1A' of the present modification example, the configuration in which the transfer apparatus controller 20 determines the shaping rate of the transfer apparatus 10 for each traffic flow on the basis of the radio quality information is also applicable to communication systems other than the mobile communication system. For example, when the base station 30 is replaced with a wireless AP, it is possible to suppress delay jitter in the wireless LAN system by acquiring radio quality information for wireless communication between the wireless AP and the wireless terminal CL connected to the wireless AP.

### <Second Embodiment>

Fig. 5 is a diagram illustrating a system configuration example of a mobile communication system 1B of the second embodiment. In the mobile communication system 1B, the base station 30 includes one or more distributed stations 31A and a central station 32, and the one or more transfer apparatuses 10 differs from the mobile communication system 1A of the first embodiment in that the one or more transfer apparatuses 10 transfers communication between one or more distributed stations 31A and the central station 32. Other configurations of the mobile communication system 1B are the same as those of the mobile communication system 1A of the first embodiment. Therefore, here, the same configurations as in the mobile communication system 1A of the first embodiment are denoted by the same reference signs as in Fig. 2, and description thereof will be omitted.

The one or more distributed stations 31A and the central station 32 are configured using, for example, a processor such as a CPU, a memory, and a communication interface, like the one or more transfer apparatuses 10 and the transfer apparatus controller 20 included in the mobile communication system 1B. Each of the one or more distributed stations 31A and the central station 32 functions as a communication apparatus including a control unit by the processor executing a program.

The control unit provides respective functions for causing the communication apparatus to function as the distributed station 31A or the central station 32. All or some of the respective functions of the control unit may be realized using hardware such as an ASIC, a PLD, an FPGA, or the like. The above program may be recorded on a computer-readable recording medium. The computer-readable recording medium includes, for example, a portable medium such as a flexible disk, a magneto-optical disc, a ROM, a CD-ROM, a semiconductor storage apparatus (such as an SSD), or a storage apparatus such as a hard disk or a semiconductor storage apparatus built into a computer system. The above program may be transmitted via a telecommunication line.

For example, the one or more distributed stations 31 and the central station 32 in the second embodiment are one or more distributed units (DUs) and central units (CUs) in a mobile communication system. In this case, a section between the CU and the DU in which the transfer apparatus 10 is installed is called a mobile midhaul (MMH). Further, for example, the one or more distributed stations 31 and the central station 32 in the second embodiment may be one or more radio units (RUs) and DUs in the mobile communication system. In this case, a section between the DU and the RU in which the transfer apparatus 10 is installed is called a mobile fronthaul (MFH).

Specifically, in the mobile communication system 1B of the second embodiment, the information acquisition unit 101A is included in a control unit of the distributed station 31A, the rate determination unit 102A is included in a control unit of the transfer apparatus controller 20, and the communication control unit 103 is included in a control unit of the transfer apparatus 10.

In this case, the information acquisition unit 101A acquires radio quality information on wireless communication between one or more distributed stations 31A and the one or more wireless terminals CL as the wireless communication information, and transmits the acquired radio quality information to the transfer apparatus controller 20. The radio quality information includes information on communication quality for each traffic flow in wireless communication between the base station 30 and the wireless terminal CL, and information indicating a priority of each traffic flow.

The rate determination unit 102A collects the radio quality information acquired by each of the one or more information acquisition units 101A, and determines the shaping rate for each traffic flow on the basis of the collected radio quality information. Here, the rate determination unit 102A considers the priority of each traffic flow in the range in which a predetermined delay requirement is satisfied, and then, determines the shaping rate for each traffic flow so that the delay jitter in the base station 30 is mitigated on the upper side with respect to the base station 30. The rate determination unit 102A notifies the communication control unit 103 of the transfer apparatus 10 of the determined shaping rate.

In the one or more transfer apparatuses 10, the communication control unit 103 executes the traffic shaping of its own apparatus on the basis of the shaping rate notified from the rate determination unit 102A of the transfer apparatus controller 20.

According to the mobile communication system 1B of the second embodiment configured as described above, the transfer apparatus 10 performs shaping using the shaping rate determined on the basis of the radio quality information on the wireless communication between the one or more wireless terminals CL and the one or more distributed stations 31A so that it is possible to suppress propagation of the delay jitter generated at a point in time of output of the distributed station 31A to the upper side in the related art.

In the above embodiment, although the case in which the base station 30 directly supplies the radio quality information to the transfer apparatus controller 20 has been described, the radio quality information may be supplied to the transfer apparatus controller 20 via another apparatus other than the base station 30. For example, in the mobile communication system 1B, when there are the plurality of base stations 30 and there is also a wireless controller that controls the plurality of base stations 30, the wireless controller may be configured to collect the radio quality information from the plurality of base stations 30 and supply the collected radio quality information of the plurality of base stations 30 to the transfer apparatus controller 20.

In the mobile communication system 1B of the second embodiment, the configuration in which the transfer apparatus controller 20 determines the shaping rate of the transfer apparatus 10 for each traffic flow on the basis of the radio quality information is also applicable to communication systems other than the mobile communication system. For example, when the one or more distributed stations 31A and the central station 32 in the second embodiment are replaced with a wireless AP and a wireless LAN controller in a wireless LAN system, it is possible to suppress delay jitter in the wireless LAN system by acquiring radio quality information for wireless communication between the wireless AP and the wireless terminal CL connected to the wireless AP.

In the present embodiment, each transfer apparatus 10 includes the communication control unit 103, and the transfer apparatus controller 20 includes the rate determination unit 102A, but the present invention is not limited thereto. For example, a form in which the communication control unit and the rate determination unit are included in the distributed station 31A, and the distributed station 31A, rather than the transfer apparatus 10, performs shaping may be adopted.

### <Third Embodiment>

Fig. 6 is a diagram illustrating a system configuration example of a mobile communication system 1C of a third embodiment. In the mobile communication system 1C, a base station 30 includes one or more distributed stations 31 and a central station 32A, and the one or more transfer apparatuses 10 differs from the mobile communication system 1A of the first embodiment in that the one or more transfer apparatuses 10 transfer communication between one or more distributed stations 31 and the central station 32A. Further, the mobile communication system 1C differs from the mobile communication system 1B of the second embodiment in that the central station 32A includes an information acquisition unit 101B (information acquirer) and the distributed station 31 does not include an information acquisition unit. Other configurations of the mobile communication system 1C are the same as those of the mobile communication system 1A of the first embodiment. Therefore, here, the same configurations as in the mobile communication system 1A of the first embodiment are denoted by the same reference signs as in Fig. 2, and description thereof will be omitted.

The one or more distributed stations 31 and the central station 32A are configured using, for example, a processor such as a CPU, a memory, and a communication interface, like the one or more transfer apparatuses 10 and the transfer apparatus controller 20 included in the mobile communication system 1C. Each of the one or more distributed stations 31 and the central station 32A functions as a communication apparatus including a control unit by the processor executing a program.

The control unit provides respective functions for causing the communication apparatus to function as the distributed station 31 or the central station 32A. All or some of the respective functions of the control unit may be realized using hardware such as an ASIC, a PLD, an FPGA, or the like. The above program may be recorded on a computer-readable recording medium. The computer-readable recording medium includes a portable medium such as a flexible disk, a magneto-optical disc, a ROM, a CD-ROM, a semiconductor storage apparatus (such as an SSD), or a storage apparatus such as a hard disk or a semiconductor storage apparatus built into a computer system. The above program may be transmitted via a telecommunication line.

For example, the one or more distributed stations 31 and the central station 32A in the third embodiment are one or more DUs and a CU in a mobile communication system. In this case, a section between the CU and the DU in which the transfer apparatus 10 is installed is called an MMH. Further, for example, the one or more distributed stations 31 and the central station 32A in the second embodiment may be one or more RUs and DUs in the mobile communication system. In this case, a section between the DU and the RU in which the transfer apparatus 10 is installed is called a mobile fronthaul (MFH).

Specifically, in the mobile communication system 1C of the third embodiment, the information acquisition unit 101B is included in a control unit of the central station 32A, the rate determination unit 102B is included in a control unit of the transfer apparatus controller 20, and the communication control unit 103 is included in a control unit of the transfer apparatus 10.

In this case, the information acquisition unit 101B acquires the radio quality information on the wireless communication between the one or more distributed stations 31 and the one or more wireless terminals CL as the wireless communication information, and transmits the acquired radio quality information to the transfer apparatus controller 20. The radio quality information includes information on communication quality for each traffic flow in wireless communication between the base station 30 and the wireless terminal CL, and information indicating a priority of each traffic flow.

The rate determination unit 102B (rate determiner) determines a shaping rate for each traffic flow on the basis of the radio quality information acquired by information acquisition unit 101B. Here, the rate determination unit 102B considers the priority of each traffic flow in the range in which a predetermined delay requirement is satisfied, and then, determines the shaping rate for each traffic flow so that the delay jitter in the base station 30 is mitigated on the upper side with respect to the base station 30. The rate determination unit 102B notifies the communication control unit 103 of the transfer apparatus 10 of the determined shaping rate.

In the one or more transfer apparatuses 10, the communication control unit 103 executes the traffic shaping of its own apparatus on the basis of the shaping rate notified from the rate determination unit 102B of the transfer apparatus controller 20.

According to the mobile communication system 1C of the third embodiment configured as described above, the transfer apparatus 10 performs shaping using the shaping rate determined on the basis of the radio quality information on the wireless communication between the one or more wireless terminals CL and the one or more distributed stations 31, so that it is possible to suppress propagation of the delay jitter generated at a point in time of output of the distributed station 31 to the upper side in the related art.

In the above embodiment, although the case in which the base station 30 directly supplies the radio quality information to the transfer apparatus controller 20 has been described, the radio quality information may be supplied to the transfer apparatus controller 20 via another apparatus other than the base station 30. For example, in the mobile communication system 1C, when there are the plurality of base stations 30 and there is also a wireless controller that controls the plurality of base stations 30, the wireless controller may be configured to collect the radio quality information from the plurality of base stations 30 and supply the collected radio quality information of the plurality of base stations 30 to the transfer apparatus controller 20.

In the mobile communication system 1C of the third embodiment, the configuration in which the transfer apparatus controller 20 determines the shaping rate of the transfer apparatus 10 for each traffic flow on the basis of the radio quality information is also applicable to communication systems other than the mobile communication system. For example, when the one or more distributed stations 31 and the central station 32Ain the third embodiment are replaced with a wireless AP and a wireless LAN controller in a wireless LAN system, it is possible to suppress delay jitter in the wireless LAN system by acquiring radio quality information for wireless communication between the wireless AP and the wireless terminal CL connected to the wireless AP.

In the present embodiment, each transfer apparatus 10 includes the communication control unit 103, and the transfer apparatus controller 20 includes the rate determination unit 102B, but the present invention is not limited thereto. For example, a form in which the distributed station 31 includes the communication control unit and the rate determination unit, and the distributed station 31 rather than the transfer apparatus 10 performs shaping may be adopted.

### <Fourth Embodiment>

Fig. 7 is a diagram illustrating a system configuration example of a mobile communication system 1D of the fourth embodiment. The mobile communication system 1D differs from the mobile communication system 1A of the first embodiment in that a base station 30 includes one or more distributed stations 31A and a central station 32A, and the one or more transfer apparatuses 10 transfer communication between one or more distributed stations 31A and the central station 32A. Further, the mobile communication system 1D differs from the mobile communication system 1B of the second embodiment in that not only the distributed station 31A includes the information acquisition unit 101A, but also the central station 32Aincludes the information acquisition unit 101B. Other configurations of the mobile communication system 1D are the same as those of the mobile communication system 1A of the first embodiment. Therefore, here, the same configurations as in the mobile communication system 1A of the first embodiment are denoted by the same reference signs as in Fig. 2, and description thereof will be omitted.

The one or more distributed stations 31A and the central station 32A are configured using, for example, a processor such as a CPU, a memory, and a communication interface, like the one or more transfer apparatuses 10 and the transfer apparatus controller 20 included in the mobile communication system 1D. Each of the one or more distributed stations 31A and the central station 32A functions as a communication apparatus including a control unit by the processor executing a program.

The control unit provides respective functions for causing the communication apparatus to function as the distributed station 31A or the central station 32A. All or some of the respective functions of the control unit may be realized using hardware such as an ASIC, a PLD, an FPGA, or the like. The above program may be recorded on a computer-readable recording medium. The computer-readable recording medium includes a portable medium such as a flexible disk, a magneto-optical disc, a ROM, a CD-ROM, a semiconductor storage apparatus (such as an SSD), or a storage apparatus such as a hard disk or a semiconductor storage apparatus built into a computer system. The above program may be transmitted via a telecommunication line.

For example, the one or more distributed stations 31A and the central station 32A in the fourth embodiment are one or more DUs and a CU in a mobile communication system. In this case, a section between the CU and the DU in which the transfer apparatus 10 is installed is called an MMH. Further, for example, the one or more distributed stations 31A and the central station 32A in the fourth embodiment may be one or more RUs and DUs in the mobile communication system. In this case, a section between the DU and the RU in which the transfer apparatus 10 is installed is called a mobile fronthaul (MFH).

Specifically, in the mobile communication system 1D of the fourth embodiment, the information acquisition unit 101A is included in a control unit of the distributed station 31A, the information acquisition unit 101B is included in a control unit of the central station 32A, the rate determination unit 102C is included in a control unit of the transfer apparatus controller 20, and the communication control unit 103 is included in a control unit of the transfer apparatus 10.

In this case, the information acquisition unit 101A and the information acquisition unit 101B acquire the radio quality information on the wireless communication between the one or more distributed stations 31 and the one or more wireless terminals CL as the wireless communication information, and transmit the acquired radio quality information to the transfer apparatus controller 20. The radio quality information includes information on communication quality for each traffic flow in wireless communication between the base station 30 and the wireless terminal CL, and information indicating a priority of each traffic flow.

The rate determination unit 102C (rate determiner) collects the radio quality information acquired by each of the one or more information acquisition units 101A and the information acquisition unit 101B, and determines the shaping rate for each traffic flow on the basis of the collected radio quality information. Here, the rate determination unit 102C considers the priority of each traffic flow in the range in which a predetermined delay requirement is satisfied, and then, determines the shaping rate for each traffic flow so that the delay jitter in the base station 30 is mitigated on the upper side with respect to the base station 30. The rate determination unit 102C notifies the communication control unit 103 of the transfer apparatus 10 of the determined shaping rate.

In the one or more transfer apparatuses 10, the communication control unit 103 executes the traffic shaping of its own apparatus on the basis of the shaping rate notified from the rate determination unit 102C of the transfer apparatus controller 20.

According to the mobile communication system 1D of the fourth embodiment configured as described above, the transfer apparatus 10 performs shaping using the shaping rate determined on the basis of the radio quality information on the wireless communication between the one or more wireless terminals CL and the one or more distributed stations 31A so that it is possible to suppress propagation of the delay jitter generated at a point in time of output of the distributed station 31A to the upper side in the related art.

In the above embodiment, although the case in which the base station 30 directly supplies the radio quality information to the transfer apparatus controller 20 has been described, the radio quality information may be supplied to the transfer apparatus controller 20 via another apparatus other than the base station 30. For example, in the mobile communication system 1D, when there are the plurality of base stations 30 and there is also a wireless controller that controls the plurality of base stations 30, the wireless controller may be configured to collect the radio quality information from the plurality of base stations 30 and supply the collected radio quality information of the plurality of base stations 30 to the transfer apparatus controller 20.

In the mobile communication system 1A of the fourth embodiment, the configuration in which the transfer apparatus controller 20 determines the shaping rate of the transfer apparatus 10 for each traffic flow on the basis of the radio quality information is also applicable to communication systems other than the mobile communication system. For example, when the one or more distributed stations 31A and the central station 32A in the fourth embodiment are replaced with a wireless AP and a wireless LAN controller in a wireless LAN system, it is possible to suppress delay jitter in the wireless LAN system by acquiring radio quality information for wireless communication between the wireless AP and the wireless terminal CL connected to the wireless AP.

In the present embodiment, although a configuration in which each transfer apparatus 10 includes the communication control unit 103, and the transfer apparatus controller 20 includes the rate determination unit 102C has been adopted, the present invention is not limited thereto. For example, a form in which the communication control unit and the rate determination unit are included in the distributed station 31A, and the distributed station 31A, rather than the transfer apparatus 10, performs shaping may be adopted.

According to the above-described embodiments, the communication system includes one or more base stations that accommodate wireless terminals, one or more transfer apparatuses that transfer uplink communication of the wireless terminal received via the base station to the upper side, and a transfer apparatus controller that controls the one or more transfer apparatuses. For example, the communication systems are the mobile communication systems 1A, 1A', 1B, 1C, and 1D in the embodiment, the wireless terminal is the wireless terminal CL in the embodiment, the base stations are the base stations 30, 30-1, and 30-2 in the embodiment, and the transfer apparatus controller is the transfer apparatus controller 20 in the embodiment.

The communication system includes an information acquisition unit, a rate determination unit, and a communication control unit. For example, the information acquisition units are the information acquisition units 101A and 101B in the embodiment, the rate determination units are the rate determination units 102A and 102B in the embodiment, and the communication control unit is the communication control unit 103 in the embodiment.

The information acquisition unit acquires information on wireless communication between the base station and the wireless terminal for each traffic flow. The rate determination unit determines the shaping rate for the traffic shaping for each traffic flow, so that the delay jitter in the base station is mitigated on the upper side with respect to the base station, on the basis of the information on the wireless communication for each traffic flow. The communication control unit executes the traffic shaping on the upper side with respect to the base station on the basis of the shaping rate determined by the rate determination unit. For example, the information on the wireless communication is radio quality information and the wireless communication information in the embodiment.

The information acquisition unit may acquire radio quality information on wireless communication between the base station and the wireless terminal for each traffic flow, the rate determination unit may determine the shaping rate for each traffic flow on the basis of association information indicating association between the radio quality information and the shaping rate, and the radio quality information acquired from the base station, and the communication control unit may execute the traffic shaping at the shaping rate determined by the rate determination unit.

The base station may include a distributed station and a central station, the information acquisition unit may acquire radio quality information on wireless communication between the distributed station and the wireless terminal for each traffic flow, the rate determination unit may determine the shaping rate for each traffic flow on the basis of association information indicating association between the radio quality information and the shaping rate, and the radio quality information acquired from the distributed station, and the communication control unit may execute the traffic shaping at the shaping rate determined by the rate determination unit. For example, the distributed stations are the distributed stations 31 and 31A in the embodiment, the central stations are the central stations 32 and 32A in the embodiment, and the association information is the association table in which the appropriate shaping rate candidates determined according to the value of the 5QI in advance in the embodiment are associated with the value of the 5QI.

The base station may include the distributed station and the central station, the information acquisition unit may acquire radio quality information on wireless communication between the distributed station and the wireless terminal for each traffic flow, the rate determination unit may determine the shaping rate for each traffic flow on the basis of association information indicating association between the radio quality information and the shaping rate, and the radio quality information acquired from the central station, and the communication control unit may execute the traffic shaping at the shaping rate determined by the rate determination unit.

The base station may include a distributed station and a central station, the information acquisition unit may acquire radio quality information on wireless communication between the distributed station and the wireless terminal for each traffic flow, the rate determination unit may determine the shaping rate for each traffic flow on the basis of association information indicating association between the radio quality information and the shaping rate, and the radio quality information acquired from the distributed station and the central station, and the communication control unit may execute the traffic shaping at the shaping rate determined by the rate determination unit.

The radio quality information may include information indicating a priority of the traffic flow, and the rate determination unit may determine the shaping rate for each traffic flow while performing priority control of uplink communication for each traffic flow on the basis of the priority.

Although the embodiments of the present invention have been described above in detail with reference to the drawings, a specific configuration is not limited to the embodiments, and includes designs and the like in a range not departing from the gist of the present invention.

### [Industrial Applicability]

The present invention is applicable to a communication system accommodating wireless terminals, and a communication control method.

### [Reference Signs List]

1A, 1A', 1B, 1C, 1D Mobile communication system
10, 10-1, 10-2, 10-3 Transfer apparatus
20 Transfer apparatus controller
30, 30-1, 30-2 Base station
31, 31A Distributed station
32, 32A Central station
40 Wireless controller
90, 90a Mobile communication system
91, 91a Server
92, 92a Transfer apparatus
93, 93a Transfer apparatus controller
94, 94a Base station
95, 95a Wireless terminal
96, 96a Transfer apparatus network
101A, 101B Information acquisition unit (Information acquirer)
102A, 102B Rate determination unit (Rate determiner)
103 Communication control unit (Communication controller)

## Claims

1. A communication system including
one or more base stations configured to accommodate wireless terminals,
one or more transfer apparatuses configured to transfer uplink communication of the wireless terminal received via the base station to an upper side, and
a transfer apparatus controller configured to control the one or more transfer apparatuses,
the communication system comprising:
an information acquisition unit configured to acquire information on wireless communication between the base station and the wireless terminal for each traffic flow;
a rate determination unit configured to determine a shaping rate of traffic shaping for each traffic flow, so that delay jitter in the base station is mitigated on an upper side with respect to the base station, on the basis of the information on the wireless communication for each traffic flow; and
a communication control unit configured to execute the traffic shaping on the upper side with respect to the base station on the basis of the shaping rate determined by the rate determination unit.

2. The communication system according to claim 1,
wherein the information acquisition unit acquires radio quality information on wireless communication between the base station and the wireless terminal for each traffic flow,
the rate determination unit determines the shaping rate for each traffic flow on the basis of association information indicating association between the radio quality information and the shaping rate, and the radio quality information acquired from the base station, and
the communication control unit executes the traffic shaping at the shaping rate determined by the rate determination unit.

3. The communication system according to claim 1,
wherein the base station includes a distributed station and a central station;
the information acquisition unit acquires the radio quality information regarding wireless communication between the distributed station and the wireless terminal for each traffic flow,
the rate determination unit determines the shaping rate for each traffic flow on the basis of association information indicating association between the radio quality information and the shaping rate, and the radio quality information acquired from the distributed station, and
the communication control unit executes the traffic shaping at the shaping rate determined by the rate determination unit.

4. The communication system according to claim 1,
wherein the base station includes a distributed station and a central station,
the information acquisition unit acquires the radio quality information regarding wireless communication between the distributed station and the wireless terminal for each traffic flow,
the rate determination unit determines the shaping rate for each traffic flow on the basis of association information indicating association between the radio quality information and the shaping rates, and the radio quality information acquired from the central station, and
the communication control unit executes the traffic shaping at the shaping rate determined by the rate determination unit.

5. The communication system according to claim 1,
wherein the base station includes a distributed station and a central station,
the information acquisition unit acquires the radio quality information regarding wireless communication between the distributed station and the wireless terminal for each traffic flow,
the rate determination unit determines the shaping rate for each traffic flow on the basis of association information indicating association between the radio quality information and the shaping rate and the radio quality information acquired from the distributed station and the central station, and
the communication control unit executes the traffic shaping at the shaping rate determined by the rate determination unit.

6. The communication system according to any one of claims 2 to 5,
wherein the radio quality information includes information indicating a priority of the traffic flow, and
the rate determination unit determines the shaping rate for each traffic flow while performing priority control of the uplink communication for each traffic flow on the basis of the priority.

7. In a communication system including
one or more base stations configured to accommodate wireless terminals,
one or more transfer apparatuses configured to transfer uplink communication of the wireless terminal received via the base station to an upper side, and
a transfer apparatus controller configured to control the one or more transfer apparatuses, a communication control method comprising:
an information acquisition step of acquiring information on wireless communication between the base station and the wireless terminal for each traffic flow;
a rate determination step of determining a shaping rate of traffic shaping for each traffic flow, so that delay jitter in the base station is mitigated on an upper side with respect to the base station, on the basis of the information on the wireless communication for each traffic flow; and
a communication control step of executing the traffic shaping on the upper side with respect to the base station on the basis of the shaping rate determined in the rate determination step.

## Amended claims

### Amended claims under Art. 19.1 PCT

1. A communication system including
one or more base stations configured to accommodate wireless terminals,
one or more transfer apparatuses configured to transfer uplink communication of the wireless terminal received via the base station to an upper side, and
a transfer apparatus controller configured to control the one or more transfer apparatuses,
the communication system comprising:
an information acquisition unit configured to acquire information on wireless communication between the base station and the wireless terminal for each traffic flow;
a rate determination unit configured to determine a shaping rate of traffic shaping for each traffic flow, so that delay jitter in the base station is mitigated on the upper side with respect to the base station, on the basis of the information on the wireless communication for each traffic flow; and
a communication control unit configured to execute the traffic shaping on the upper side with respect to the base station on the basis of the shaping rate determined by the rate determination unit.

2. The communication system according to claim 1,
wherein the information acquisition unit acquires radio quality information on wireless communication between the base station and the wireless terminal for each traffic flow,
the rate determination unit determines the shaping rate for each traffic flow on the basis of association information indicating association between the radio quality information and the shaping rate, and the radio quality information acquired from the base station, and
the communication control unit executes the traffic shaping at the shaping rate determined by the rate determination unit.

3. The communication system according to claim 1,
wherein the base station includes a distributed station and a central station;
the information acquisition unit acquires the radio quality information regarding wireless communication between the distributed station and the wireless terminal for each traffic flow,
the rate determination unit determines the shaping rate for each traffic flow on the basis of association information indicating association between the radio quality information and the shaping rate, and the radio quality information acquired from the distributed station, and
the communication control unit executes the traffic shaping at the shaping rate determined by the rate determination unit.

4. The communication system according to claim 1,
wherein the base station includes a distributed station and a central station,
the information acquisition unit acquires the radio quality information regarding wireless communication between the distributed station and the wireless terminal for each traffic flow, the rate determination unit determines the shaping rate for each traffic flow on the basis of association information indicating association between the radio quality information and the shaping rates, and the radio quality information acquired from the central station, and
the communication control unit executes the traffic shaping at the shaping rate determined by the rate determination unit.

5. The communication system according to claim 1,
wherein the base station includes a distributed station and a central station,
the information acquisition unit acquires the radio quality information regarding wireless communication between the distributed station and the wireless terminal for each traffic flow, the rate determination unit determines the shaping rate for each traffic flow on the basis of association information indicating association between the radio quality information and the shaping rate and the radio quality information acquired from the distributed station and the central station, and
the communication control unit executes the traffic shaping at the shaping rate determined by the rate determination unit.

6. The communication system according to any one of claims 2 to 5,
wherein the radio quality information includes information indicating a priority of the traffic flow, and
the rate determination unit determines the shaping rate for each traffic flow while performing priority control of the uplink communication for each traffic flow on the basis of the priority.

7. In a communication system including
one or more base stations configured to accommodate wireless terminals,
one or more transfer apparatuses configured to transfer uplink communication of the wireless terminal received via the base station to an upper side, and
a transfer apparatus controller configured to control the one or more transfer apparatuses,
a communication control method comprising:
an information acquisition step of acquiring information on wireless communication between the base station and the wireless terminal for each traffic flow;
a rate determination step of determining a shaping rate of traffic shaping for each traffic flow, so that delay jitter in the base station is mitigated on the upper side with respect to the base station, on the basis of the information on the wireless communication for each traffic flow; and
a communication control step of executing the traffic shaping on the upper side with respect to the base station on the basis of the shaping rate determined in the rate determination step.

8. (Added) A transfer apparatus controller for controlling one or more transfer apparatuses configured to transfer uplink communication of a wireless terminal received via one or more base stations accommodating the wireless terminal to an upper side, the transfer apparatus controller comprising:
a rate determination unit configured to determine a shaping rate of traffic shaping for each traffic flow, so that delay jitter in the base station is mitigated on the upper side with respect to the base station, on the basis of information on wireless communication for each traffic flow between the base station and the wireless terminal; and
a transmission unit configured to transmit the shaping rate determined by the rate determination unit to the transfer apparatus executing traffic shaping on the upper side with respect to the base station.
